# EUROPÄISCHE PATENTANMELDUNG

(11) **EP 1 683 618 A2**
(43) Veröffentlichungstag der Anmeldung: **26.07.2006**
(21) Anmeldenummer: 06000544.4
(22) Anmeldetag: 12.01.2006
(51) Int. Cl.: B29C 44/60, B29C 44/28

(54) **Verfahren und Anlage zur optimierten Herstellung von Schaumstoff in einem kontinuierlichen Blockschaumprozess**

(30) Priorität: 25.01.2005 DE 102005003341
(71) Anmelder: Bayer MaterialScience AG, 51368 Leverkusen (DE)
(72) Erfinder: Ehbing, Hubert, Dr., 51519 Odenthal (DE); Zien, Holger, Dr., 51065 Köln (DE); Frei, Johann, 8645 Jona (CH)

(57) **Zusammenfassung**

Die Erfindung betrifft ein Verfahren und Anlage zur optimierten Herstellung von Schaumstoff in einem kontinuierlichen Blockschaumprozess mit folgenden Schritten:
- Erfassung des Ist-Schaumhöhenprofils quer zur Förderrichtung,
- Bestimmung einer Stellgröße für den Blockschaumprozess in Abhängigkeit von einer Abweichung des Ist-Schaumhöhenprofils von einem Soll-Schaumhöhenprofil.
Der expandierte Schaum (4) wird seitlich durch das Seitenpapier (8) und die Schäumkanalwand (7) begrenzt. Oberhalb des Abdeckpapiers (5) befindet sich das Abdeckgewicht (9). Das Abdeckgewicht (9) wird in einer bevorzugten Ausführungsform durch ein Kontergewicht (10) eingestellt. Das Kontergewicht (10) ist über ein Führungsrollensystem (11) und einem Seilzug (12) mit dem Abdeckgewicht (9) verbunden.
Quer zur Förderrichtung sind Sensoren (13,14,15,16 und 17) angeordnet. Beispielsweise dient der Sensor (13) dazu, die Schaumhöhe (18) des Schaumstoffs durch Messung des Abstandes (19) zwischen dem Sensor (13) und der Oberfläche des expandierenden Schaums (4) zu bestimmen. Entsprechend werden mittels der Sensoren (14,15,16 und 17) die Schaumhöhen (20,21,22 bzw. 23) ermittelt.
Die Sensoren (13,14,15,16 und 17) sind jeweils mit einem Bussystem (24) verbunden. Das Bussystem (24) ist mit einem Regler (25) verbunden. Über das Bussystem (24) erhält der Regler (25) die Messsignale der Sensoren (13,14,15,16 und 17). Aufgrund dieser Messsignale ermittelt der Regler (25) eine Stellgröße zur Nachregelung des Blockschaumprozesses. Beispielsweise dient als Stellgröße das Gewicht der Abdeckung (9) und/oder die Geschwindigkeit des Transportbands (1) und/oder die pro Zeiteinheit über den Mischkopf (3) zugeführte Menge des reaktiven chemischen Systems und/oder die chemische Zusammensetzung des Systems.

## Beschreibung

Die Erfindung betrifft ein Verfahren und eine Anlage zur Herstellung von Schaumstoff in einem kontinuierlichen Schaumprozess, insbesondere die Herstellung von Polyurethan-Schaumstoff.

Die Produktqualität von Schaumstoffen hängt von einer Vielzahl von Umgebungsparametern und Anlagenparametern ab. Dies gilt insbesondere für die Herstellung von Polyurethan-Schaum.

Es sind verschiedene computergestützte Verfahren für die Qualitätssicherung bei der Herstellung von Polyurethan-Schaum bekannt geworden, wie z.B. aus "Software to Manage a Continous Production of Flexible Polyurethane Foams by Slabstock Technology", Salvatore Consoli, Journal of CELLULAR PLASTICS, Volume 33, März 1997, Seite 102, "Foam Roadmap On-Line Answernostics", James D. Shoup, Polyurethane 1995, September 26-29, 1995, Seiten 489, 490 und "Mathematical Property Prediction Models for Flexible Polyurethane Foams", Reinhart Schiffauer, Adv. Urethane Sci. Techn. 14 (1998), Seiten 1 bis 44.

Aus "Experten mit System, Prozesssteuerung des PUR-RRIM-Verfahrens zur Herstellung von Karosserieaußenteilen", F. Schnabel, K.-H. Dörner, Kunststoffe, 88. Jahrgang, 10/98 und "PUR-Teile kostengünstig fertigen, Stand der Polyurethan-RRIM-Technologie", Karl-Heinz Dörner, Hans Joachim Meiners, Hans-Joachim Ludwig, Kunststoffe, 91. Jahrgang, 4/2001 sind ferner Expertensysteme zur Verarbeitung von Prozessparametern bei der RIM-Verarbeitung bekannt. Diese Expertensysteme sollen Aussagen hinsichtlich der Produkteigenschaften, der Prozessüberwachung, der Qualitätssicherung und der vorbeugenden Instandhaltung treffen können.

Darüber hinaus beschreibt DE 28 19 709 B1 ein Verfahren zur kontinuierlichen Herstellung von mit Decksichten versehenen Schaumplatten, bei dem quer zur Förderrichtung im Einlaufquerschnitt die Dicke des Schaums mit Ultraschall erfasst wird. Die Fertigungsanlage wird dann über die Förderbandgeschwindigkeit und/oder die aufgebrachte Schaummenge gesteuert. Ziel ist es hierbei, eine möglichst gleichmäßige Verteilung des Schaums und damit eine gleichmäßige Qualität des Schaums zu erreichen.

In DE 196 16 643 C1 wird ein Verfahren beschrieben, bei dem in einer Anlage zur kontinuierlichen Herstellung von mit Deckschichten versehenen Schaumplatten mit einer Laser-Messvorrichtung der Abstand zwischen einem festen Punkt und der Flanke des aufschäumenden Reaktionsgemisches gemessen wird. Zur Regelung der Qualität der Schaumstoffplatten wird der Ist-Abstandswert mit einem schaumstoffabhängigen Sollwert verglichen. Nach Maßgabe der Differenz zwischen Ist- und Sollwert wird die Arbeitsgeschwindigkeit der Anlage gesteuert.

DE 199 58 689 A1 beschreibt ein Verfahren, bei dem mittels einer Kamera die Oberfläche eines diskontinuierlich hergestellten Schaums aufgezeichnet wird. Aus den aufgezeichneten Daten wird die Steigkurve des Schaums ermittelt, die wiederum Aussagen über die Reaktionskinetik des Reaktionsgemisches erlaubt.

Für einen kontinuierlichen Blockschaumprozess wird in DE 102 37 005 A1 ein Verfahren beschrieben, bei dem entlang der Fördervorrichtung kontinuierlich Ist-Steighöhen erfasst werden. In Abhängigkeit von möglichen Abweichungen zwischen den Ist-Steighöhen und vorgegebenen Soll-Steighöhen wird eine Stellgröße zur Steuerung des Blockschaumprozesses ermittelt. Auch hier ist die Zielsetzung des Verfahrens die Realisierung eines möglichst gleichmäßigen Fertigungsprozesses und mithin gleichmäßiger Schaumqualität.

Ferner sind aus dem Stand der Technik verschiedene Verfahren und Anlagentypen zur Herstellung von Polyurethan-Blockschaum und anderen Schaumstoffen bekannt. Beispiele sind Planibloc-, Draka-Petzetakis-, Maxfoam-, Vertifoam Edge Control- und VPF-Verfahren, sowie UBT- und QFM-Anlagen.

Verschiedene Vorrichtungen für die kontinuierliche Herstellung von Polyurethan-Schaumstoff blöcken sind ferner aus DE 691 19 244 T2 und US 4 492 664 A bekannt. Ein weiteres Gerät zur Herstellung von Polyurethan-Schaumstoff ist aus DE 696 10 885 T2 bekannt. Verschiedene Verfahren zur Herstellung von Polyurethan-Schaumstoffen auf solchen Anlagen zeigen DE 38 19 940 A1, DE 196 49 829 A1, DE 43 15 874 A1 und DE 195 06 671 C2.

Der Erfindung liegt die Aufgabe zu Grunde, ein verbessertes Verfahren zur Herstellung von Schaumstoff in einem kontinuierlichen Blockschaum-Prozess und eine verbesserte Anlage zur Herstellung von Schaumstoff in einem solchen Prozess zu schaffen.

Bei der kontinuierlichen Herstellung von Polyurethan-Weichschaum in Anlagen mit rechteckigem Schäumkanal führt der Aufschäumvorgang entlang der äußeren Schaumkanalwand bzw. entlang des Seitenpapiers zu einem Block mit ausgeprägter Kuppe. Verantwortlich hierfür ist die Reibung des Reaktionsgemisches an der seitlichen Papierbahn. Der Schaum steigt dort langsamer als in der Mitte. Werden aus dem Schaum rechtwinklige Halbzeuge geschnitten (z.B. Matratzen), so vermindert die Kuppenbildung die Ausbeute an nutzbarem Schaumstoff.

Zur Reduzierung der Kuppenbildung sind verschiedene Verfahren entwickelt worden. Beim Draka-Petzetakis-Verfahren wird die Reibung durch Hochziehen einer seitlichen Polyethylen-Folie unter einem bestimmten Winkel synchron zur Steigbewegung des Schaumstoffs aufgehoben. Beim Maxfoam-Prozess verhindern ein über die gesamte Blockbreite reichender Trog, eine Ablaufschräge (Fallbrett) und eine Relativbewegung der Seitenfolien eine Relativbewegung zwischen Kanalwand und Reaktionsgemisch.

Verfahren wie das Hennecke-Planibloc-Verfahren oder Anlagen vom Typ UBT oder QFM benutzen Abdeckgewichte, die auf den ansteigenden Schaum aufgebracht werden. Durch den Druck der Abdeckelemente wird die Ausbildung der Blockkuppe vermieden. Für die Qualität des Schaumstoffs sind die Positionierung und das Gewicht der Abdeckelemente entscheidend. In der Praxis findet man sowohl maschinell als auch über Seilzüge und Kontergewichte manuell einzustellende Abdeckelemente. Drücken die Abdeckgewichte zu gering auf den Schaum, kommt es nach wie vor zu einer Kuppenbildung. Drücken die Abdeckgewichte allerdings zu stark auf den Schaum, so hat dies mehrere Nachteile. Einerseits wird zwischen den Abdeckgewichten und der seitlichen Kanalwand Schaum nach oben gedrückt, der nach der Aushärtung wiederum als Verschnittverlust anfällt ("Ohrenbildung"). Gleichzeitig wird die Schaumstruktur in der Nähe der Wand durch das Herausquetschen des Schaums gestört und es können Lunker entstehen. Zu stark eingestellte Abdeckgewichte komprimieren ferner den Schaum im oberen Bereich des Blockes, was eine über den Querschnitt des Schaumblocks ungleichmäßige Schaumstruktur bewirkt. Aufgrund der Reibung an der Schaumkanalwand und der dadurch bedingten gekrümmten Kontur des Schaums ist ein vollkommen rechtwinkliger Querschnitt des Schaums nicht möglich und somit ein gewisses Maß an "Ohrenbildung" erforderlich.

Die Erfindung erlaubt eine verbesserte Kontrolle und eine verbesserte Regelung der Herstellung von Schaumstoff in einem kontinuierlichem Schaumprozess durch Erfassung des Höhenprofils des Schaums an mehreren Stellen quer zur Förderrichtung des Schaumstoffs in der Anlage. Die Ist-Messwerte werden mit entsprechenden Soll-Messwerten verglichen. Aus einer eventuellen Abweichung der Ist- von den Soll-Messwerten wird eine Stellgröße für die Nachregelung des Prozesses ermittelt.

Von besonderem Vorteil ist hierbei, dass während der laufenden Produktion des Schaumstoffs Anlagenparameter und/oder die Zusammensetzung des Ausgangsmaterials für den Schaumstoff nachgeregelt werden können, um so zu einem möglichst gleich bleibenden Querschnitt des Schaumstoffs mit minimalen Schnittverlusten zu kommen. Dies ist unter anderem erforderlich, weil sich die Schäumanlage im laufenden Betrieb durch die exotherme Polyurethan-Reaktion fortlaufend aufheizt. Das dadurch veränderte Schäumverhalten wirkt sich auch auf das Schäum-Querprofil aus.

Ferner wird die Qualität des hergestellten. Schaums verbessert, dadurch dass beispielsweise Fehler durch zu stark oder zu gering eingestellte Abdeckgewichte vermieden werden. Da die genaue Einstellung der Abdeckgewichte, der Geschwindigkeit bzw. des Winkels, unter dem die Seitenfolien hochgezogen werden, und der Neigung der Ablaufschräge/des Fallbretts häufig parallel zum Anfahrprozess erfolgt bzw. eine Nachregulierung während der Fertigung notwendig ist, hat das Verfahren zudem den weiteren Vorteil, dass die für das Einfahren der Anlage benötigte Zeit und der durch den Anfahrprozess bedingte Ausschuss reduziert werden.

Ein unsymmetrisches Höhenprofil quer zur Schäumrichtung kann entstehen durch Abdeckgewichte die quer zur Förderrichtung ungleichmäßig aufgelegt werden oder Seitenfolien, die auf der einen Seite mit einer höheren Geschwindigkeit oder unter einem anderem Winkel hochgezogen werden als auf der anderen Seite. Die Messung des Querprofils über den gesamten Querschnitt erlaubt, diese Fehleinstellungen rechzeitig zu erkennen und im laufenden Prozess durch Verstellen von Anlagen- und/oder Rezepturparameter zu korrigieren.

Nach einer bevorzugten Ausführungsform der Erfindung erfolgt die Herstellung des Schaumstoffs nach dem Hennecke-Planibloc-Verfahren und/oder in einer Anlage vom Typ UBT oder QFM. Solche Anlagen haben üblicherweise eine Fördervorrichtung, auf der der expandierende Schaumstoff in eine Förderrichtung bewegt wird. Zum Teil ist in dem Expansionsbereich des Schaumstoffs ein so genanntes Fallbrett vorhanden.

Erfindungsgemäß werden nach dem Ablegen eines ersten Abdeckelements bei dem vorgenannten Verfahren oder in einem der vorgenannten Anlagentypen mehrere Abstandssensoren quer zur Förderrichtung des Schaums angeordnet, um die Ist-Höhe des Schaums an unterschiedlichen Stellen zu messen. Dabei kommen bevorzugt berührungslose Laserabstandssensoren oder Ultraschall-Sensoren zum Einsatz, die eine Messung der Ist-Höhe des Schaums erlauben. Alternativ oder ergänzend können auch Lichtschranken, CCD-Kameras oder andere Sensoren, die eine Höhenmessung der Ist-Steighöhen erlauben, eingesetzt werden.

Nach einer weiteren bevorzugten Ausführungsform der Erfindung erfolgt die Herstellung des Schaumstoffs auf Anlagen vom Typ Draka-Petzetakis oder Maxfoam. Bei beiden Anlagentypen werden seitliche Folien synchron zum Schäumprozess unter einem definierten Winkel zur Aufschäumrichtung geführt, um so die Kuppenbildung zu vermindern. Die Geschwindigkeit der Folienbewegung, die Folienspannung und der Winkel, unter dem die Folien hochgezogen werden, sind maßgeblich für die Form der sich ausbildenden Kuppe. Beide Verfahren arbeiten in der Regel ohne Abdeckgewichte.

Erfindungsgemäß werden bei den letztgenannten Verfahren oder in einem der letztgenannten Anlagentypen mehrere Abstandssensoren quer zur Förderrichtung des Schaums angeordnet, um die Ist-Höhe des Schaums an unterschiedlichen Stellen zu messen. Dabei kommen bevorzugt berührungslose Laserabstandssensoren oder Ultraschall-Sensoren zum Einsatz, die eine Messung der Ist-Höhe des Schaums erlauben. Alternativ oder ergänzend können auch Lichtschranken, CCD-Kameras oder andere Sensoren, die eine Höhenmessung der Ist-Steighöhen erlauben, eingesetzt werden.

Nach einer bevorzugten Ausführungsform der Erfindung wird durch die gemessenen Ist-Höhen des Schaums eine Ausgleichskurve gelegt, die mit einer-Soll-Kurve verglichen wird. Beispielsweise werden einzelne Höhenwerte und/oder die Differenz der Steigungen der Kurven und/oder die Differenz der Integrale der Kurven als Basis für die Bestimmung einer Stellgröße verwendet.

Nach einer bevorzugten Ausführungsform der Erfindung dient das Gewicht und/oder die Positionierung der Abdeckelemente als Stellgröße. Liegen beispielsweise die Ist-Höhen des Querprofils über den Soll-Höhen, so wird das Gewicht der Abdeckelemente solange verringert bzw. ihre Position so lange verändert, bis die Ist-Höhen hinreichend mit den Soll-Höhen übereinstimmen.

Nach einer weiteren bevorzugten Ausführungsform der Erfindung dienen die Geschwindigkeiten und der Winkel, mit und unter dem die seitlichen Folien in Aufschäumrichtung gezogen werden und/oder die Folienspannungen als. Stellgröße. Liegen beispielsweise die Ist-Höhen des Querprofils über den Soll-Höhen, so wird die Geschwindigkeit der seitlichen Folien solange verringert, bis die Ist-Höhen hinreichend mit den Soll-Höhen übereinstimmen.

Nach einer weiteren bevorzugten Ausfiihrungsform der Erfindung dient die Fördergeschwindigkeit des expandierenden Schaumstoffs als Stellgröße. Liegen beispielsweise die Ist-Höhen über den Soll-Höhen, so wird die Fördergeschwindigkeit solange erhöht, bis die Ist-Höhen hinreichend mit den Soll-Höhen übereinstimmen.

Nach einer weiteren bevorzugten Ausführungsform der Erfindung dient die pro Zeiteinheit dem Blockschaumprozess zugeführte Materialmenge als Stellgröße. Liegen beispielsweise die Ist-Höhen über den Soll-Höhen, so wird die pro Zeiteinheit zugeführte Materialmenge solange verringert, bis die Ist- und die Soll-Höhen hinreichend übereinstimmen.

Nach einer weiteren bevorzugten Ausführungsform der Erfindung dient die chemische Zusammensetzung des dem Blockschaumprozess zugeführten Materials als Stellgröße. Liegen beispielsweise die Ist-Höhen über den Soll-Höhen, so wird die chemische Zusammensetzung so verändert, dass es zu einem verminderten Aufschäumen des Schaumstoffs oder zu einem anderen Fließen des Reaktionsgemisches kommt.

Nach einer weiteren bevorzugten Ausführungsform der Erfindung dient das Auftragsverfahren, mit dem das Reaktionsgemisch auf das Transportband aufgebracht wird, als Stellgröße. Vorzugsweise wird hierzu die Auftragsbewegung des Mischkopfs als Stellgröße für den Prozess verwendet.

Nach einer weiteren bevorzugten Ausführungsform der Erfindung dient der Neigungswinkel des Fallbrettes als Stellgröße. Liegen beispielsweise die Ist-Höhen über den Soll-Höhen, so wird der Neigungswinkel des Fallbrettes so lange verändert, bis die Soll- und die Ist-Höhen wieder übereinstimmen.

Nach einer weiteren bevorzugten Ausführungsform der Erfindung dient bei Verwendung von Abdeckgewichten der Spalt zwischen dem oberen Deckpapier und dem Seitenpapier als Stellgröße.
Liegen beispielsweise die Ist-Höhen über den Soll-Höhen, so kann der Spalt beispielsweise durch Wahl eines schmaleren Deckpapiers oder durch eine Verbreiterung des Aufschäumkanals vergrößert und die Ist-Höhen reduziert werden.

Nach einer weiteren bevorzugten Ausführungsform der Erfindung werden aufgrund einer Abweichung der Ist- von den Soll-Höhen verschiedene Stellgrößen bestimmt, wie z.B. eine Änderung des Gewichtes der Abdeckung, eine Änderung der Folienabzugsgeschwindigkeit, eine Änderung der Fördergeschwindigkeit, der pro Zeiteinheit zugeführten Materialmenge und/oder der chemischen Zusammensetzung des zugeführten Materials.

Nach einer weiteren bevorzugten Ausführungsform der Erfindung werden aufgrund des gemessenen Quer-Höhenprofils Bereiche geringer Güte des hergestellten Schaumstoffs identifiziert. Solche Bereiche werden aus dem Schaumstoffblock ausgeschnitten. Im Vergleich zum Stand der Technik hat dies den Vorteil, dass weniger Ausschussmaterial produziert wird.

Im Weiteren werden bevorzugte Ausführungsformen der. Erfindung mit Bezugnahme auf die Zeichnungen näher erläutert. Es zeigen:
- Figur 1: eine Prinzipdarstellung einer Blockschaumanlage in einem kontinuierlichem Rechteck-Verfahren nach Hennecke (QFM-Verfahren),
- Figur 2: eine Prinzipdarstellung einer bevorzugten Ausführungsform der Erfindung,
- Figur 3: ein richtig eingestelltes Schaum-Querprofil,
- Figur 4: ein Schaum-Querprofil mit zu starker Ohrenbildung,
- Figur 5: ein Schaum-Querprofil mit Kuppenbildung,
- Figur 6: ein Schaum-Querprofil mit seitlichen Folien, die zu schnell in Schäumrichtung bewegt werden,
- Figur 7: ein Schaum-Querprofil mit seitlichen Folien, die zu langsam in Schäumrichtung bewegt werden.

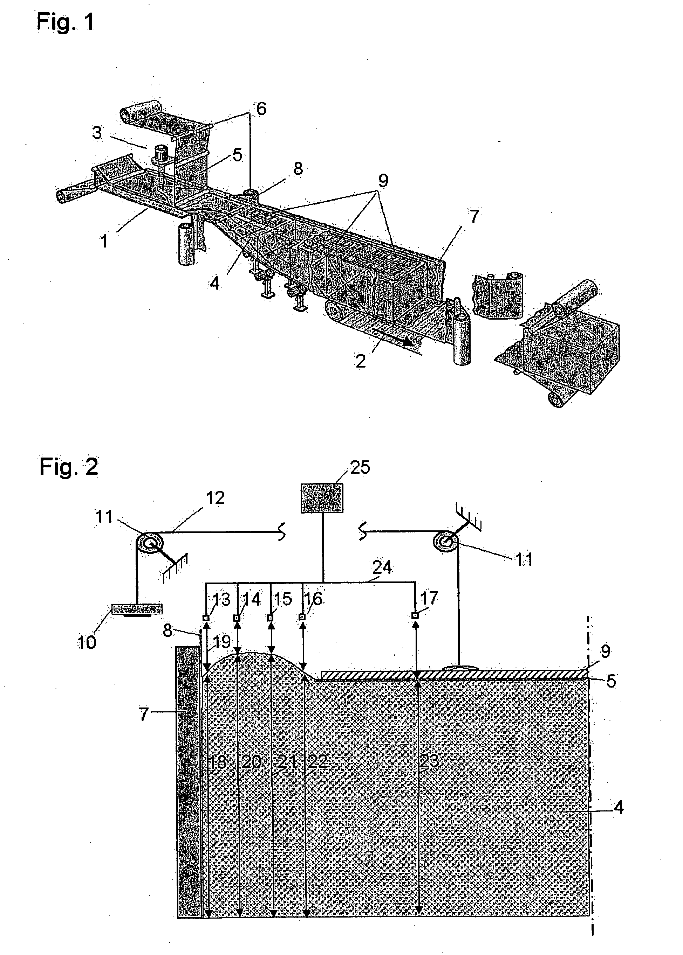

Die Figur 1 zeigt eine Anlage zur Herstellung von Schaumstoff, insbesondere von Polyurethan-Schaumstoff, in einem kontinuierlichem Blockschaumprozess nach einem QFM-Verfahren.

Die Anlage weist ein Transportband 1 auf, welches in der Förderrichtung 2 bewegt wird. Am Anfang des Transportbands 1 befindet sich oberhalb des Transportbands 1 ein Mischkopf 3. Der Mischkopf 3 dient zur Aufbringung eines reaktiven chemischen Systems auf die Oberfläche des Transportbands 1. Bei dem reaktiven chemischen System handelt es sich um ein schäumendes Gemisch, beispielsweise zur Herstellung von Polyurethan-Schaumstoff.

Das reaktive chemische Gemisch expandiert auf dem Transportband 1, so dass ein Expansionsbereich mit expandierendem Schaum 4 entsteht. Auf die Schaumoberfläche wird ein Abdeckpapier 5 aufgebracht, welches über Rollen 6 zugeführt wird. Zwischen dem Schaum 4 und der Schäumkanalwand 7 wird beidseitig ein Seitenpapier und/oder eine Seitenfolie 8 zugeführt, die ebenfalls über Rollen 6 zugeführt wird. Zur Reduzierung der Kuppenbildung werden auf das obere Abdeckpapier 5 Gewichte in Form von Gleitkufen 9 aufgebracht.

Figur 2 zeigt im Querschnitt eine bevorzugte Ausführungsform der Erfindung. Der expandierte Schaum 4 wird seitlich durch das Seitenpapier 8 und die Schäumkanalwand 7 begrenzt. Oberhalb des Abdeckpapiers 5 befindet sich das Abdeckgewicht 9. Das Abdeckgewicht 9 wird in einer bevorzugten Ausfiihrungsform durch ein Kontergewicht 10 eingestellt. Das Kontergewicht 10 ist über ein Führungsrollensystem 11 und einem Seilzug 12 mit dem Abdeckgewicht 9 verbunden.

Quer zur Förderrichtung sind Sensoren 13, 14, 15, 16 und 17 angeordnet. Beispielsweise dient der Sensor 13 dazu, die Schaumhöhe 18 des Schaumstoffs durch Messung des Abstandes 19 zwischen dem Sensor 13 und der Oberfläche des expandierenden Schaums 4 zu bestimmen. Entsprechend werden mittels der Sensoren 14, 15, 16 und 17 die Schaumhöhen 20, 21, 22 bzw. 23 ermittelt.

Die Sensoren 13, 14, 15, 16 und 17 sind jeweils mit einem Bussystem 24 verbunden. Das Bussystem 24 ist mit einem Regler 25 verbunden. Über das Bussystem 24 erhält der Regler 25 die Messsignale der Sensoren 13, 14, 15; 16 und 17. Aufgrund dieser Messsignale ermittelt der Regler 25 eine Stellgröße zur Nachregelung des Blockschaumprozesses. Beispielsweise dient als Stellgröße das Gewicht der Abdeckung 9 und/oder die Geschwindigkeit des Transportbands 1 und/oder die pro Zeiteinheit über den Mischkopf 3 zugeführte Menge des reaktiven chemischen Systems und/oder die chemische Zusammensetzung des Systems.

Zur Durchführung der Regelung wird der Unterschied zwischen dem Ist- und dem Soll-Höhen ausgewertet. Nach der Maßgabe der Differenz zwischen den Soll- und den Ist-Höhen wird dann die Stellgröße bestimmt. Dies kann beispielsweise auch so erfolgen, dass eine Ausgleichskurve durch die messtechnisch ermittelten Ist-Höhen 18, 20, 21, 22 und 23 gelegt wird. Hierbei kann es sich um eine Ausgleichsgerade oder um ein Polynom, z.B. ein Spline-Polynom oder um Wavelets handeln.

Zur Bestimmung einer Stellgröße können ferner die unterschiedlichen Steigungen der Kurven herangezogen werden. Diese Differenz in der Steigung stellt ein Maß für die Abweichung der Ist-Höhen von den Soll-Höhen dar.

Alternativ oder zusätzlich können zum Beispiel die Integrale der Ist-Kurve und das Integral der Soll-Kurve verglichen werden. Die Differenz der beiden Integrale ergibt wiederum ein Maß für die Abweichung des Ist-Profils von dem Soll-Profil.

Alternativ oder zusätzlich können auch charakteristische Punkte oder Wendepunkte der Ist- und Sollkurven für die Ermittlung einer Stellgröße verwendet werden.

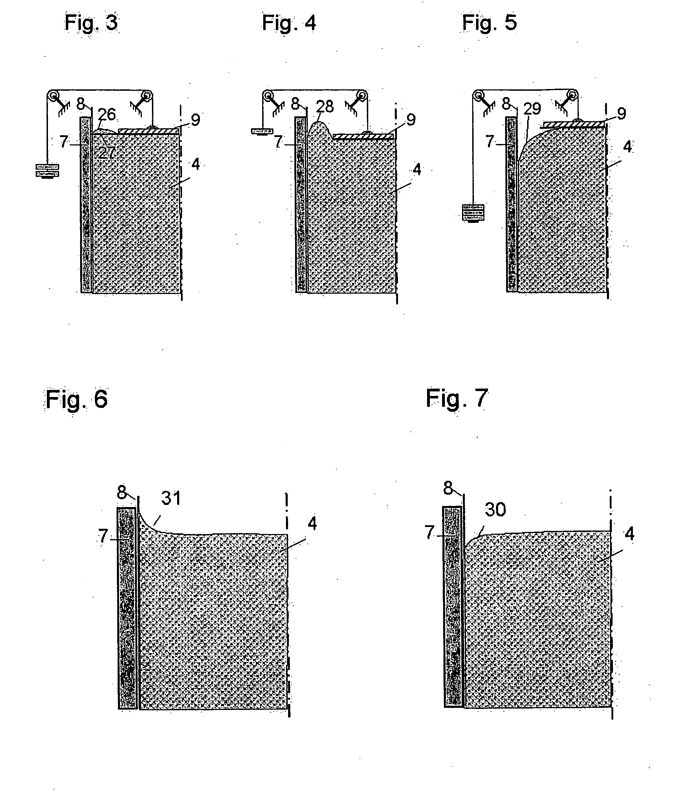

Die Figur 3 zeigt ein richtig eingestelltes Schaum-Querprofil, bei dem das Höhenprofil 26 (Schaumohr) zwischen dem Abdeckgewicht 9 und der Seitenwand 7 bzw. dem Seitenpapier 8 ein wenig die rechtwinklige Kontur 27 überragt. Bei dieser Form ist einerseits sichergestellt, dass der Verschnitt gering ist. Anderseits ist auch der Bereich unmittelbar an der Werkzeugwand ausreichend durch Schaum ausgefüllt und die Schaumstruktur besitzt über dem Querschnitt eine gleichmäßige Struktur.

Falls sich jedoch ein von dem Idealfall abweichendes Querhöhenprofil 28 oder 29 gemäß Fig. 4 oder Fig. 5 ergeben sollte, so müsste jeweils das Gewicht der Abdeckung 9 und/oder die Geschwindigkeit des Transportbands 1 und/oder die pro Zeiteinheit über den Mischkopf 3 zugeführte Menge des reaktiven chemischen Systems und/oder die chemische Zusammensetzung des Systems und/oder der Bewegungsablauf des Schäumkopfes und/oder der Spalt zwischen Deck-und Seitenpapier entsprechend den Messwerten der Höhenmessung angepasst werden, bis das Querhöhenprofil gemäß Fig. 3 wieder erreicht ist.

Anlagen vom Typ Draka-Petzetakis arbeiten ohne Abdeckgewichte. Die seitlichen Folien werden synchron zum Schäumprozess in Aufschäumrichtung geführt, um so die Kuppenbildung zu verhindern. Figur 6 zeigt ein Schaumprofil bei dem die seitliche Folie 8 zwischen der Schäumkanalwand 7 und dem Schaum 4 zu schnell in Aufschäumrichtung bewegt wird. Es ergibt sich ein nach oben gekrümmtes Schäumpröfil 30. Figur 7 zeigt ein Schaumprofil bei dem die seitliche Folie 8 zwischen der Schäumkanalwand 7 und dem Schaum 4 zu langsam in Aufschäumrichtung bewegt wird. Es ergibt sich ein nach unten gekrümmtes Schäumprofil 31. Die in den Figuren 6 und 7 dargelegten Sachverhalte gelten auch für das Maxfoam-Verfahren. Bei diesem Verfahren wird die Kuppenbildung primär durch einen Schäumtrog und die Ablaufschräge, auf die der schon reagierende Schaum aufgebracht wird, unterdrückt. Gleichzeitig können analog zum Verfahren nach Draka-Petzetakis die seitlichen Folien in Aufschäumrichtung mitgeführt werden. Auch bei diesem Verfahren ist die Geschwindigkeit der Folienmitführung auf die Verfahrens- und Rezepturparameter einzustellen.

### Bezugszeichenliste

- Transportband: 1
- Förderrichtung: 2
- Mischkopf: 3
- Expandierender Schaum: 4
- Abdeckpapier: 5
- Rollen: 6
- Schäumkanalwand: 7
- Seitenpapier: 8
- Abdeckgewicht: 9
- Kontergewicht: 10
- Führungssystem: 11
- Seilzug: 12
- Sensor: 13
- Sensor: 14
- Sensor: 15
- Sensor: 16
- Sensor: 17
- Schaumhöhe: 18
- Abstand: 19
- Schaumhöhe: 20
- Schaumhöhe: 21
- Schaumhöhe: 22
- Schaumhöhe: 23
- Bussystem: 24
- Regler: 25
- Soll-Schaum-Querprofil: 26
- Rechtwinkliges Schaumprofil: 27
- Querprofil: 28
- Querprofil: 29
- Querprofil: 30
- Querprofil: 31

## Patentansprüche

1. Verfahren zur Herstellung von Schaumstoff in einem kontinuierlichem Blockschaumprozess mit folgenden Schritten:
- Erfassung des Ist-Schaumhöhenprofils quer zur Förderrichtung,
- Bestimmung einer Stellgröße für den Blockschaumprozess in Abhängigkeit von einer Abweichung des Ist-Schaumhöhenprofils von einem Soll-Schaumhöhenprofil.

2. Verfahren nach Anspruch 1, wobei es sich bei dem Schaumstoff um Polyurethan-Schaumstoff handelt.

3. Verfahren nach Anspruch 1 oder 2, wobei es sich bei dem kontinuierlichen Blockschaumprozess um ein Verfahren vom Typ Hennecke-Planibloc, vom Typ Draka-Petzetakis, vom Typ Maxfoam, und/oder einen auf Anlagen vom Typ UBT oder QFM durchgeführten Prozess handelt.

4. Verfahren nach Anspruch 1, 2 oder 3, wobei eine Fördervorrichtung mit einem Förderband, welches in Förderrichtung angetrieben wird, verwendet wird.

5. Verfahren nach Anspruch 4, wobei die Fördervorrichtung ein Fallbrett aufweist.

6. Verfahren nach einem der vorhergehenden Ansprüche 1 bis 5, wobei das Ist-Schaumhöhenprofil durch quer zur Förderrichtung angeordnete Höhensensoren erfasst wird.

7. Verfahren nach einem der vorhergehenden Ansprüche 1 bis 6, wobei das Gewicht einer auf dem Blockschaum aufliegenden Abdeckung als Stellgröße dient.

8. Verfahren nach einem der vorhergehenden Ansprüche 1 bis 7, wobei die Geschwindigkeit und der Winkel der Seitenpapiere oder Seitenfolien relativ zum Aufschäumvorgang und/oder die Seitenpapier- oder Folienspannung als Stellgröße dienen.

9. Verfahren nach einem der vorhergehenden Ansprüche 1 bis 8, wobei die Fördergeschwindigkeit des Schaums als Stellgröße dient.

10. Verfahren nach einem der vorhergehenden Ansprüche 1 bis 9, wobei die pro Zeiteinheit dem Blockschaumprozess zugeführte Materialmenge als -Stellgröße dient.

11. Verfahren nach einem der vorhergehenden Ansprüche 1 bis 10, wobei die chemische Zusammensetzung des dem Blockschaumprozess zugeführten Materials als Stellgröße dient.

12. Verfahren nach einem der vorhergehenden Ansprüche 1 bis 11, wobei das Auftragsverfahren und/oder die Verfahrbewegung des Mischkopfes als Stellgröße dient.

13. Verfahren nach einem der vorhergehenden Ansprüche 1 bis 12, wobei der Spalt zwischen dem Deck- und dem Seitenpapier als Stellgröße dient.

14. Verfahren nach einem der vorhergehenden Ansprüche 1 bis 13, wobei zumindest eine Produkteigenschaft in Bezug auf den Schaumstoff, der sich in einem bestimmten Bereich entlang der Förderrichtung befindet, in Abhängigkeit von dem Ist-Schaumhöhenprofil prognostiziert wird.

15. Verfahren nach Anspruch 14, wobei zumindest eine Produkteigenschaft zur Klassifizierung der Güte des Schaumstoffs verwendet wird.

16. Verfahren nach Anspruch 15, wobei Bereiche des Schaumstoffblocks, die eine geringe Güte aufweisen, ausgeschnitten werden.

17. Anlage zur Herstellung von Schaumstoff in einem kontinuierlichem Blockschaumprozess mit
- Mitteln (13, 14, 15, 16, 17) zur Erfassung von Ist-Schaumhöhen des Schaumstoffs quer zur Förderrichtung,
- Mitteln (25) zur Bestimmung einer Stellgröße für den Blockschaumprozess in Abhängigkeit von einer Abweichung der Ist-Schaumhöhen von vorgegebenen Soll-Schaumhöhen.

18. Anlage nach Anspruch 17, wobei es sich bei dem kontinuierlichen Blockschaumprozess um ein Verfahren vom Typ Hennecke-Planibloc, vom Typ Draka-Petzetakis, oder vom Typ Maxfoam handelt

19. Anlage nach Anspruch 17 vom Typ UBT oder QFM.

20. Anlage nach einem der Ansprüche 17 bis 19 mit einer Fördervorrichtung, die ein in eine Förderrichtung (2) antreibbares Förderband (1) aufweist.

21. Anlage nach einem der Ansprüche 17 bis 20 mit einem Fallbrett.

22. Anlage nach einem der Ansprüche 17 bis 21, wobei die Mittel zur Erfassung von Ist-Schaumhöhen quer zur Förderrichtung angeordnete Höhen-Sensoren aufweisen.

23. Anlage nach einem der Ansprüche 17 bis 22, bei der die Mittel zur Bestimmung einer Stellgröße zur Bestimmung der Gewichte der Abdeckung ausgebildet sind.

24. Anlage nach einem der Ansprüche 17 bis 23, bei der die Mittel zur Bestimmung einer Stellgröße zur Bestimmung der Abzugsgeschwindigkeit, des Winkels zur Schäumrichtung und der Vorspannung der Seitenpapiere oder Seitenfolien ausgebildet sind.

25. Anlage nach einem der Ansprüche 17 bis 24, bei der die Mittel zur Bestimmung einer Stellgröße zur Bestimmung der Fördergeschwindigkeit ausgebildet sind.

26. Anlage nach einem der Ansprüche 17 bis 25, bei der die Mittel zur Bestimmung der Stellgröße zur Bestimmung der pro Zeiteinheit zu dem Blockschaumprozess zuzuführenden Materialmenge ausgebildet sind.

27. Anlage nach einem der Ansprüche 17 bis 26, bei der die Mittel zur Bestimmung der Stellgröße zur Bestimmung der chemischen Zusammensetzung des dem Blockschaumprozess zuzuführenden Materials ausgebildet sind.

28. Anlage nach einem der Ansprüche 17 bis 27, bei der die Mittel zur Bestimmung der Stellgröße zur Bestimmung des Auftragsverfahren und/oder der Verfahrbewegung des Mischkopfes ausgebildet sind.

29. Anlage nach einem der Ansprüche 17 bis 28, bei der die Mittel zur Bestimmung der Stellgröße zur Bestimmung des Spaltes zwischen Deck- und Seitenpapier ausgebildet sind.

30. Anlage nach einem der Ansprüche 17 bis 29 mit Mitteln (25) zur Prognose zumindest einer Produkteigenschaft von Schaumstoff, der sich an einer bestimmten Position entlang der Förderrichtung befindet, in Abhängigkeit von den Ist-Schaumhöhen.

31. Anlage nach Anspruch 30 mit Mitteln zur Steuerung einer Schneidvorrichtung zur Zerteilung des Schaumstoffs in Blöcke, die eine prognostizierte Produkteigenschaft aufweisen.
